(19) **Europäisches Patentamt / European Patent Office / Office européen des brevets**

(11) **EP 3 201 151 B1**

(12) **FASCICULE DE BREVET EUROPEEN**

(45) Date de publication et mention
de la délivrance du brevet:
**10.03.2021 Bulletin 2021/10**

(51) Int Cl.:
***C03C 17/36*** (2006.01)     ***E06B 3/66*** (2006.01)

(21) Numéro de dépôt: **15781389.0**

(22) Date de dépôt: **29.09.2015**

(86) Numéro de dépôt international:
**PCT/FR2015/052590**

(87) Numéro de publication internationale:
**WO 2016/051069 (07.04.2016 Gazette 2016/14)**

(54) **SUBSTRAT MUNI D'UN EMPILEMENT A PROPRIETES THERMIQUES ET A COUCHE TERMINALE METALLIQUE**

SUBSTRAT MIT EINEM SCHICHTSTAPEL MIT THERMISCHEN EIGENSCHAFTEN UND EINER METALLANSCHLUSSSCHICHT

SUBSTRATE PROVIDED WITH A STACK HAVING THERMAL PROPERTIES AND HAVING A METAL TERMINAL LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2014 FR 1459258**

(43) Date de publication de la demande:
**09.08.2017 Bulletin 2017/32**

(73) Titulaire: **SAINT-GOBAIN GLASS FRANCE**
**92400 Courbevoie (FR)**

(72) Inventeurs:
- **BROSSARD, Sophie**
  **Minneapolis, MN 55419 (US)**
- **MERCADIER, Nicolas**
  **75014 Paris (FR)**
- **JRIBI, Ramzi**
  **75012 Paris (FR)**
- **KUHN, Bertrand**
  **75010 Paris (FR)**
- **CANOVA, Lorenzo**
  **75015 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
WO-A1-2005/115940     WO-A1-2009/001143
WO-A1-2010/103224     WO-A1-2010/142926
WO-A1-2014/044984     US-A- 5 942 338

EP 3 201 151 B1

**Description**

L'invention concerne un substrat verrier revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, lesdits revêtements comportant chacun au moins une couche diélectrique, ladite couche fonctionnelle étant disposée entre les deux revêtements antireflet, ledit empilement comportant en outre une couche terminale qui est la couche de l'empilement qui est la plus éloignée de ladite face.

Dans ce type d'empilement, la couche fonctionnelle se trouve ainsi disposée entre deux revêtements antireflet comportant chacun en général plusieurs couches qui sont chacune en un matériau diélectrique du type nitrure, et notamment nitrure de silicium ou d'aluminium, ou oxyde. Du point de vu optique, le but de ces revêtements qui encadrent la ou chaque couche fonctionnelle métallique est « d'antirefléter » cette couche fonctionnelle métallique.

Un revêtement de blocage est toutefois intercalé parfois entre un ou chaque revêtement antireflet et la couche métallique fonctionnelle, le revêtement de blocage disposé sous la couche fonctionnelle en direction du substrat la protège lors d'un éventuel traitement thermique à haute température, du type bombage et/ou trempe et le revêtement de blocage disposé sur la couche fonctionnelle à l'opposé du substrat protège cette couche d'une éventuelle dégradation lors du dépôt du revêtement antireflet supérieur et lors d'un éventuel traitement thermique à haute température, du type bombage et/ou trempe.

L'invention concerne plus particulièrement l'utilisation d'une couche terminale de l'empilement, celle la plus éloignée de la face du substrat sur laquelle est déposée l'empilement et la mise en œuvre d'un traitement de l'empilement de couches minces complet à l'aide d'une source produisant un rayonnement et notamment un rayonnement infrarouge.

Il est connu, en particulier de la demande internationale de brevet N° WO 2010/142926 de prévoir une couche absorbante en couche terminale d'un empilement et d'appliquer un traitement après le dépôt d'un empilement pour diminuer l'émissivité, ou améliorer les propriétés optiques, d'empilements bas-émissifs. L'utilisation d'une couche terminale métallique permet d'accroitre l'absorption et de diminuer la puissance nécessaire au traitement. Comme la couche terminale s'oxyde lors du traitement et devient transparente, les caractéristiques optiques de l'empilement après traitement sont intéressantes (une transmission lumineuse élevée peut notamment être obtenue).

Toutefois cette solution n'est pas complètement satisfaisante pour certaines applications en raison de l'inhomogénéité des sources utilisées pour le traitement et/ou des imperfections du système de convoyage, dont la vitesse n'est jamais absolument constante.

Cela se traduit par des inhomogénéités optiques perceptibles à l'œil (variations de transmission/réflexion lumineuse et de couleurs d'un point à un à un autre).

Le but de l'invention est de parvenir à remédier aux inconvénients de l'art antérieur, en mettant au point un nouveau type d'empilement de couches à une ou plusieurs couches fonctionnelles, empilement qui présente, après traitement, une faible résistance par carré (et donc une faible émissivité), une transmission lumineuse élevée, ainsi qu'une homogénéité d'aspect.

Un autre but important est de permettre d'obtenir un aspect en transmission et en réflexion beaucoup plus homogène.

L'invention a ainsi pour objet, dans son acception la plus large, un substrat verrier revêtu sur une face d'un empilement de couches minces à propriétés de réflexion dans l'infrarouge et/ou dans le rayonnement solaire selon la revendication 1. Cet empilement comporte au moins une couche fonctionnelle métallique, en particulier à base d'argent ou d'alliage métallique contenant de l'argent, et au moins deux revêtements antireflet, lesdits revêtements comportant chacun au moins une couche diélectrique, ladite couche fonctionnelle étant disposée entre les deux revêtements antireflet, ledit empilement comportant en outre une couche terminale qui est la couche de l'empilement qui est la plus éloignée de ladite face. Le substrat revêtu de l'empilement est remarquable en ce que ladite couche terminale est une couche métallique constituée du zinc et de l'étain, en $Sn_xZn_y$ avec un rapport de $0,55 \leq x/y \leq 0,83$ et présentant une épaisseur physique comprise entre 0,5 nm et 5,0 nm en excluant ces valeurs, voire entre 0,6 nm et 2,7 nm en excluant ces valeurs.

Comme habituellement, par « couche diélectrique » au sens de la présente invention, il faut comprendre que du point de vue de sa nature, le matériau de la couche est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Par « couche absorbante » au sens de la présente invention, il faut comprendre que la couche est un matériau présentant un coefficient k moyen, sur toute la plage de longueur d'onde du visible (de 380 nm à 780 nm), supérieur à 0,5 et présentant une résistivité électrique à l'état massif (telle que connue dans la littérature) supérieure à $10^{-6}$ $\Omega$.cm.

Il est rappelé que n désigne l'indice de réfraction réel du matériau à une longueur d'onde donnée et le coefficient k représente la partie imaginaire de l'indice de réfraction à une longueur d'onde donnée ; le rapport n/k étant calculé à une longueur d'onde donnée identique pour n et pour k.

Les valeurs d'indice de réfraction indiquées dans le présent document sont les valeurs mesurées comme habituellement à la longueur d'onde de 550 nm.

Par « couche à base de ... » au sens de la présente invention, il faut comprendre que la couche comprend à plus de 50 % atomique le matériau mentionné.

Par « couche métallique » au sens de la présente invention, il faut comprendre que la couche est absorbante comme indiquée ci-avant et qu'elle ne comporte pas d'atome d'oxygène, ni d'atome d'azote.

L'empilement selon l'invention comporte ainsi une dernière couche (« overcoat » en anglais), c'est-à-dire une couche de protection, déposée à l'état métallique, à partir d'une cible métallique et dans une atmosphère ne comportant ni oxygène, ni azote, introduit volontairement. Cette couche se retrouve oxydée pour l'essentiel stœchiométriquement dans l'empilement après le traitement à l'aide d'une source produisant un rayonnement et notamment un rayonnement infrarouge.

Au sens de l'invention, le fait que la couche terminale est constituée d'étain et de zinc signifie que ces deux éléments représentent de 98 à 100 % en poids de la cible utilisée pour déposer la couche terminale (et donc de la couche terminale ainsi déposée) ; il n'est pas exclu que la couche puisse comporter un ou plusieurs éléments métalliques, comme par exemple de l'aluminium et/ou de l'antimoine, comme dopant pour améliorer la conduction de la cible, ou comme impureté.

Dans une version particulière de l'invention, ladite couche terminale est située directement sur une couche diélectrique à base de nitrure de silicium et ne comportant pas d'oxygène. Cette couche diélectrique à base de nitrure de silicium présente de préférence une épaisseur physique comprise entre 10 et 50 nm, voire entre 10 et 30 nm, cette couche étant de préférence en nitrure de silicium $Si_3N_4$ dopé à l'aluminium.

Dans une autre version particulière de l'invention, le revêtement antireflet disposé au-dessus de ladite couche fonctionnelle métallique, à l'opposé de ladite face, comporte une couche diélectrique haut indice en un matériau présentant un indice de réfraction compris entre 2,3 et 2,7, cette couche étant de préférence à base d'oxyde. Les valeurs d'indice de réfraction indiquées dans le présent document sont les valeurs mesurées comme habituellement à la longueur d'onde de 550 nm.

Cette couche haut indice présente, de préférence une épaisseur physique comprise entre 5 et 15 nm.

Cette couche haut indice permet de maximaliser la haute transmission lumineuse dans le visible de l'empilement et a une action favorable sur l'obtention de couleurs neutres, tant en transmission qu'en réflexion.

Dans une autre version particulière de l'invention, la couche fonctionnelle est déposée directement sur un revêtement de sous-blocage disposé entre la couche fonctionnelle et le revêtement diélectrique sous-jacent à la couche fonctionnelle et/ou la couche fonctionnelle est déposée directement sous un revêtement de sur-blocage disposé entre la couche fonctionnelle et le revêtement diélectrique sus-jacent à la couche fonctionnelle et le revêtement de sous-blocage et/ou le revêtement de sur-blocage comprend une couche fine à base de nickel ou de titane présentant une épaisseur physique telle que 0,2 nm ≤ e' ≤ 2,5 nm.

L'invention concerne en outre un procédé d'obtention d'un substrat revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent, et deux revêtements antireflet, comprenant les étapes suivantes, dans l'ordre :

- le dépôt sur une face dudit substrat d'un empilement de couches minces à propriétés de réflexion dans l'infrarouge et/ou dans le rayonnement solaire selon l'invention comportant au moins une couche fonctionnelle métallique, en particulier à base d'argent ou d'alliage métallique contenant de l'argent, et au moins deux revêtements antireflet, puis
- le traitement dudit empilement de couches minces à l'aide d'une source produisant un rayonnement et notamment un rayonnement infrarouge dans une atmosphère comprenant de l'oxygène, ledit rapport x/y de la couche terminale étant identique avant et après ledit traitement.

Il est possible en outre de prévoir l'utilisation d'une couche terminale métallique selon l'invention constituée du zinc et de l'étain, en $Sn_xZn_y$ avec un rapport de 0,55 ≤ x/y ≤ 0,83 et présentant une épaisseur physique comprise entre 0,5 nm et 5,0 nm en excluant ces valeurs, voire entre 0,6 nm et 2,7 nm en excluant ces valeurs comme couche de l'empilement qui est la plus éloignée de ladite face du substrat sur laquelle est déposée l'empilement de couches minces.

Il est possible en outre de prévoir un vitrage multiple comportant au moins deux substrats qui sont maintenus ensemble par une structure de châssis, ledit vitrage réalisant une séparation entre un espace extérieur et un espace intérieur, dans lequel au moins une lame de gaz intercalaire est disposée entre les deux substrats, un substrat étant selon l'invention.

De préférence, un seul substrat du vitrage multiple comportant au moins deux substrats ou du vitrage multiple comportant au moins trois substrats est revêtu sur une face intérieure en contact avec la lame de gaz intercalaire d'un empilement de couches minces à propriétés de réflexion dans l'infrarouge et/ou dans le rayonnement solaire.

Le vitrage incorpore alors au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Le vitrage peut présenter une structure feuilletée, associant notamment au moins deux substrats rigides du type verre par au moins une feuille de polymère thermoplastique, afin de présenter une structure de type verre/empilement de couches minces/feuille(s)/verre / lame de gaz intercalaire / feuille de verre. Le polymère peut notamment être à base de polyvinylbutyral PVB, éthylène vinylacétate EVA, polyéthylène téréphtalate PET, polychlorure de vinyle PVC.

Avantageusement, la présente invention permet ainsi de réaliser un empilement de couches minces à une ou plusieurs couches fonctionnelles présentant une basse émissivité (notamment ≤ 1 %) et un haut facteur solaire qui présente un aspect optique homogène après traitement de l'empilement à l'aide d'une source produisant un rayonnement et notamment un rayonnement infrarouge.

Avantageusement, le traitement à l'aide d'une source de rayonnement n'est pas un traitement thermique à haut température de tout l'ensemble constitué du substrat et de l'empilement ; le substrat n'est donc pas traité thermiquement par ce traitement à l'aide d'une source de rayonnement (pas de bombage, trempe ou recuit).

Les détails et caractéristiques avantageuses de l'invention ressortent des exemples non limitatifs suivants, illustrés à l'aide des figures ci-jointes illustrant :

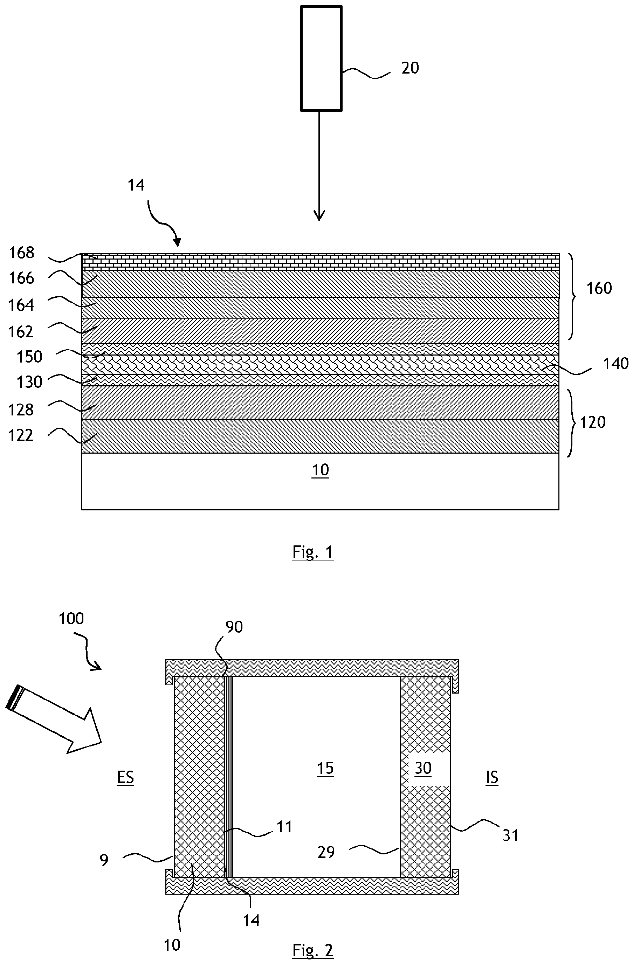

- en figure 1, un empilement monocouche fonctionnelle selon l'invention, la couche fonctionnelle étant déposée directement sur un revêtement de sous-blocage et directement sous un revêtement de sur-blocage, l'empilement étant illustré pendant le traitement à l'aide d'une source produisant un rayonnement ; et
- en figure 2, une solution de double vitrage incorporant un empilement monocouche fonctionnelle.

Dans ces figures, les proportions entre les épaisseurs des différentes couches ou des différents éléments ne sont pas rigoureusement respectées afin de faciliter leur lecture.

La figure 1 illustre une structure d'un empilement 14 monocouche fonctionnelle selon l'invention déposé sur une face 11 d'un substrat 10 verrier, transparent, dans laquelle la couche fonctionnelle 140 unique, en particulier à base d'argent ou d'alliage métallique contenant de l'argent, est disposée entre deux revêtements antireflet, le revêtement antireflet sous-jacent 120 situé en dessous de la couche fonctionnelle 140 en direction du substrat 10 et le revêtement antireflet sus-jacent 160 disposé au-dessus de la couche fonctionnelle 140 à l'opposé du substrat 10.

Ces deux revêtements antireflet 120, 160, comportent chacun au moins une couche diélectrique 122, 128 ; 162, 164, 166.

Eventuellement, d'une part la couche fonctionnelle 140 peut être déposée directement sur un revêtement de sous-blocage 130 disposé entre le revêtement antireflet sous-jacent 120 et la couche fonctionnelle 140 et d'autre part la couche fonctionnelle 140 peut être déposée directement sous un revêtement de sur-blocage 150 disposé entre la couche fonctionnelle 140 et le revêtement antireflet sus-jacent 160.

Les couches de sous et/ou sur-blocage, bien que déposées sous forme métalliques et présentées comme étant des couches métalliques, sont parfois dans la pratique des couches oxydées car une de leurs fonctions (en particulier pour la couche de sur-blocage) est de s'oxyder au cours du dépôt de l'empilement afin de protéger la couche fonctionnelle.

Le revêtement antireflet 160 situé au-dessus de la couche fonctionnelle métallique (ou qui serait situé au-dessus de la couche fonctionnelle métallique la plus éloignée du substrat s'il y avait plusieurs couches fonctionnelles métalliques) se termine par une couche terminale 168, qui est la couche de l'empilement qui est la plus éloignée de la face 11.

Lorsqu'un empilement est utilisé dans un vitrage multiple 100 de structure double vitrage, comme illustré en figure 2, ce vitrage comporte deux substrats 10, 30 qui sont maintenus ensemble par une structure de châssis 90 et qui sont séparés l'un de l'autre par une lame de gaz intercalaire 15.

Le vitrage réalise ainsi une séparation entre un espace extérieur ES et un espace intérieur IS.

L'empilement peut être positionné en face 2 (sur la feuille la plus à l'extérieur du bâtiment en considérant le sens incident de la lumière solaire entrant dans le bâtiment et sur sa face tournée vers la lame de gaz).

La figure 2 illustre ce positionnement (le sens incident de la lumière solaire entrant dans le bâtiment étant illustré par la double flèche) en face 2 d'un empilement de couches minces 14 positionné sur une face intérieure 11 du substrat 10 en contact avec la lame de gaz intercalaire 15, l'autre face 9 du substrat 10 étant en contact avec l'espace extérieur ES.

Toutefois, il peut aussi être envisagé que dans cette structure de double vitrage, l'un des substrats présente une structure feuilletée.

Six exemples ont été réalisés sur la base de la structure d'empilement illustrée en figure 1 et ont été numérotés de 1 à 6. Les exemples 2 et 3 sont exemples selon l'invention alors que les exemples 1 et 4 à 6 sont des exemples comparatifs

Pour ces exemples 1 à 6, le revêtement antireflet 120, comporte deux couches diélectriques 122, 128, la couche diélectrique 122, au contact de la face 11 est une couche à haut indice de réfraction et elle est en contact avec une couche diélectrique de mouillage 128 disposée juste sous la couche fonctionnelle métallique 140.

Dans les exemples 1 à 6, il n'y a pas de revêtement de sous-blocage 130.

La couche diélectrique 122 à haut indice de réfraction est à base d'oxyde de titane ; Elle présente un indice de réfraction compris entre 2,3 et 2,7, et qui est ici précisément de 2,46.

Pour ces exemples 1 à 6, la couche diélectrique 128 est appelée « couche de mouillage » car elle permet d'améliorer la cristallisation de la couche fonctionnelle métallique 140 qui est ici en argent, ce qui améliore sa conductivité. Cette couche diélectrique 128 est en oxyde de zinc ZnO (déposé à partir d'une cible céramique constituée de 50 % atomique de zinc et 50 % atomique d'oxygène).

Le revêtement antireflet sus-jacent 160 comprend une couche diélectrique 162 en oxyde de zinc (déposé à partir d'une cible céramique constituée de 50 % atomique de zinc dopé et 50 % atomique d'oxygène), puis une couche diélectrique 164 à haut indice, dans le même matériau que la couche diélectrique 122.

La couche diélectrique suivante, 166, est en nitrure de $Si_8N_4$:Al et est déposée à partir d'une cible métallique en Si dopée à 8 % en masse d'aluminium.

Pour tous les exemples ci-après, les conditions de dépôt des couches sont :

| Couche | Cible employée | Pression de dépôt | Gaz |
|---|---|---|---|
| $Si_3N_4$:Al | Si:Al à 92:8 % wt | $1,5.10^{-3}$ mbar | Ar /(Ar + $N_2$) à 45 % |
| $TiO_2$ | $TiO_2$ | $2.10^{-3}$ mbar | Ar /(Ar + $O_2$) à 90 % |
| Ti | Ti | $7.10^{-3}$ mbar | Ar à 100 % |
| ZnO | ZnO à 50:50 % atomique | $2.10^{-3}$ mbar | Ar /(Ar + $O_2$) à 90 % |
| $Sn_xZn_y$ | Sn:Zn à 56,5:43,5 % wt | $2.10^{-3}$ mbar | Ar à 100 % |
| Ag | Ag | $2.10^{-3}$ mbar | Ar à 100 % |

Les couches déposées peuvent ainsi être classées en quatre catégories :

i- couches en matériau antireflet/diélectrique, présentant un rapport n/k sur toute la plage de longueur d'onde du visible supérieur à 5 : $Si_3N_4$, $TiO_2$, ZnO

ii- couche métallique en matériau absorbant, présentant un coefficient k moyen, sur toute la plage de longueur d'onde du visible, supérieur à 0,5 et une résistivité électrique à l'état massif qui est supérieure à $10^{-6}$ $\Omega$.cm : $Sn_xZn_y$

iii- couches fonctionnelles métalliques en matériau à propriétés de réflexion dans l'infrarouge et/ou dans le rayonnement solaire : Ag

iv- couches de sous-blocage et de sur-blocage destinées à protéger la couche fonctionnelle contre une modification de sa nature lors du dépôt de l'empilement ; leur influence sur les propriétés optiques et énergétiques est en général ignorée.

Il a été constaté que l'argent présente un rapport 0 < n/k < 5 sur toute la plage de longueur d'onde du visible, mais sa résistivité électrique à l'état massif est inférieure à $10^{-6}$ $\Omega$.cm.

Dans tous les exemples ci-après l'empilement de couches minces est déposé sur un substrat en verre sodo-calcique clair d'une épaisseur de 4 mm de la marque Planilux, distribué par la société SAINT-GOBAIN.

Pour ces substrats,

- R indique la résistance par carré de l'empilement, en ohms par carré ;
- $A_L$ indique l'absorption lumineuse dans le visible en %, mesurée selon l'illuminant D65 à 2° ;
- $A_{980}$ indique l'absorption mesurée spécifiquement à la longueur d'onde de 980 nm, en %, mesurées selon l'illuminant D65 à 2° ;
- V indique la visibilité du lignage ; il s'agit d'une note de 1, 2, 3 ou 4, attribuée par un opérateur : la note 1 lorsqu'aucune inhomogénéité n'est perceptible à l'œil, la note 2 lorsque des inhomogénéités localisées, limitées à certaines zones de l'échantillon, sont perceptibles à l'œil sous éclairement diffus intense (> 800 lux), la note 3 lorsque des inhomogénéités localisées et limitées à certaines zones de l'échantillon sont perceptibles à l'œil sous éclairement standard (< 500 lux) et la note 4 lorsque des inhomogénéités étendues à toute la surface de l'échantillon sont perceptibles à l'œil sous éclairement standard (< 500 lux).
- $\Delta_{Em}$ constitue une caractérisation de l'inhomogénéité optique après traitement ; il s'agit d'une variation de couleur en réflexion qui est calculée en mesurant, dans le système La*b*, selon l'illuminant D65 à 2°, la couleur en réflexion côté empilement tous les centimètres, selon la direction et le sens de défilement du substrat dans l'enceinte de dépôt de l'empilement. Ainsi, pour un point x positionné selon cette direction et un point x+1 situé à 1 centimètre de x selon cette même direction et pour lesquels sont calculées les variations de couleur en réflexion côté empilement $\Delta a^*$, $\Delta b^*$ et $\Delta L$ :

$$\Delta_{Em} = ((\Delta a^*)^2 + (\Delta b^*)^2 + (\Delta L)^2)^{1/2}$$

Pour être satisfaisante, cette variation doit être inférieure à 0,3.

Tous ces exemples permettent d'atteindre une faible émissivité, de l'ordre de 1 % et un haut facteur g, de l'ordre de 60 %.

Le tableau 1 ci-après illustre les épaisseurs géométriques ou physiques (et non pas les épaisseurs optiques) en nanomètres, en référence à la figure 1, de chacune des couches des exemples 1 à 6 :

Tableau 1

| Couche | Matériau | Ex. 1-6 |
|--------|----------|---------|
| 168 | | variable |
| 166 | $Si_3N_4$:Al | 25 |
| 164 | $TiO_2$ | 12 |
| 162 | ZnO | 4 |
| 150 | Ti | 0,4 |
| 140 | Ag | 13,5 |
| 128 | ZnO | 4 |
| 122 | $TiO_2$ | 24 |

Le tableau 2 ci-après présent les matériaux testés pour les couches terminales 168 des exemples 1 à 6, ainsi que leurs épaisseurs respectives (en nm) :

Tableau 2

| Couche | Ex. 1 | Ex. 2 | Ex. 3 | Ex. 4 | Ex. 5 | Ex. 6 |
|--------|-------|-------|-------|-------|-------|-------|
| 168 | $TiO_2$ | $Sn_xZn_y$ | $Sn_xZn_y$ | $Sn_xZn_y$ | Ti | Ti |
| Epaisseur | 2 | 1,7 | 2,3 | 5 | 2,5 | 3,5 |

La couche terminale 168 des exemples et 3 est une couche métallique constituée du zinc et de l'étain, en $Sn_xZn_y$ avec un rapport de $0,1 \leq x/y \leq 2,4$ et présentant une épaisseur physique comprise entre 0,5 nm et 5,0 nm en excluant ces valeurs, et même une épaisseur physique comprise entre 0,6 nm et 2,7 nm en excluant ces valeurs. Les exemples 2 et 3 sont des exemples selon l'invention alors que les exemples 1 et 4 à 6 sont des exemples comparatifs.

Le tableau 3 ci-après résume les principales caractéristiques optiques et énergétiques de ces exemples 1 à 6, respectivement avant traitement (BT) et après traitement (AT) :

Tableau 3

| | | $A_l$ | $A_{980}$ | R | V | $\Delta_{Em}$ |
|------|----|------|------|------|-----|------|
| Ex. 1 | BT | 8,5 | 12,9 | 2,61 | | |
| | AT | 5,7 | 10,1 | 2,04 | 3,5 | 0,30 |
| Ex. 2 | BT | 14,8 | 17,4 | 2,61 | | |
| | AT | 5,7 | 10,4 | 2,03 | 3 | 0,28 |
| Ex. 3 | BT | 23,1 | 25,0 | 2,66 | | |

(suite)

|  |  | $A_l$ | $A_{980}$ | R | V | $\Delta_{Em}$ |
|---|---|---|---|---|---|---|
|  | AT | 6,2 | 10,8 | 2,03 | 2 | 0,15 |
| Ex. 4 | BT | 39,3 | 28,5 | 2,55 |  |  |
|  | AT | 7,9 | 9,1 | 1,91 | 4 | 0,35 |
| Ex. 5 | BT | 17,0 | 25,3 | 2,49 |  |  |
|  | AT | 6,4 | 11,5 | 2,0 | 3 | 0,32 |
| Ex. 6 | BT | 31,5 | 45,7 | 2,51 |  |  |
|  | AT | 15,5 | 28,1 | 1,96 | 4 | nc |

La présence de la couche terminale 168 métallique pour les ex. 2 et 3 provoque une hausse de l'absorption à 980 nm de respectivement 4,5 % et 12,1 % (en valeurs absolues) par rapport à celle de l'ex. 1 qui comporte une couche terminale diélectrique, en raison de l'état métallique de ces couches terminales avant le traitement.

Le traitement constiste ici en un défilement du substrat 10 à 7 m/min sous une ligne laser 20 de 45 $\mu$m de large et de puissance 25 W/mm avec la ligne laser orientée perpendiculairement à la face 11 et en direction de la couche terminale 168, c'est-à-dire en disposant la ligne laser (illustrée par la flèche noire droite) au-dessus de l'empilement et en orientant le laser en direction de l'empilement, comme visible en figure 1.

Le traitement diminue l'émissivité de l'empilement d'environ 4 %.

Après traitement et oxydation de la couche terminale 168, les ex. 2 et 3 présentent une résistance par carré et une absorption lumineuse identiques à celles de l'ex. 1 après traitement, mais sont optiquement plus homogènes, avec une visibilité du lignage V, égale ou inférieure à 3.

Si l'épaisseur de la couche terminale est trop importante (ex. 4) le lignage devient trop visible, avec une visibilité V supérieure à 3. Une absorption résiduelle subsiste après traitement et cette absorption est elle-même inhomogène.

Si la couche terminale 168 métallique est choisie en titane (ex. 5 et 6) au lieu du $Sn_xZn_y$, l'absorption de l'empilement avant traitement laser est accrue et la puissance requise pour le traitement est en conséquence diminuée. La couche terminale s'oxyde aussi complètement au traitement laser et l'absorption de l'empilement est identique à l'absorption de l'empilement référence. Par contre, l'empilement présente un aspect ligné lorsqu'il est observé en réflexion côté couche.

Pour les ex. 2 et 3, il a été constaté que la couche terminale métallique s'oxyde rapidement une fois une température seuil atteinte. L'absorption diminue alors de sorte que la température atteint un plafond. La température atteinte et la durée du chauffage sont ainsi régulées par l'oxydation et ne sont plus influencées par les fluctuations du flux lumineux incident.

Il est probable que la couche terminale des ex. 2 et 3 agit comme une barrière qui prévient la migration d'oxygène atmosphérique dans l'empilement et limite l'évolution des propriétés optiques des couches inférieures.

En outre, le fait que la couche terminale 168 en $Sn_xZn_y$ est située directement sur une couche diélectrique à base de nitrure de silicium et ne comportant pas d'oxygène participe probablement à la stabilité optique en raison de la proximité des indices de réfraction du $Sn_xZn_y$ oxydé et du nitrure de silicium.

Une couche terminale déposée à partir d'une cible en Sn:Zn:Sb à 30:68:2 % wt a également été testée et a donné des résultats similaires.

La présente invention peut aussi être utilisée pour un empilement de couches minces à plusieurs couches fonctionnelles. La couche terminale selon l'invention est la couche de l'empilement qui est la plus éloignée de la face du substrat sur laquelle est déposé l'empilement.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

**1.** Substrat (10) verrier, revêtu sur une face (11) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent, et au moins deux revêtements antireflet (120, 160), lesdits revêtements comportant chacun au moins une couche diélectrique (122, 164), ladite couche fonctionnelle (140) étant disposée entre les deux revêtements antireflet (120, 160), ledit empilement comportant en outre une couche terminale (168) qui est la couche de l'empilement qui est la plus éloignée de ladite face (11), *caractérisé en ce que* ladite couche terminale (168) est une couche métallique constituée du zinc et de l'étain, en $Sn_xZn_y$ avec un rapport de $0,55 \leq x/y \leq 0,83$ et présentant une épaisseur physique comprise entre 0,5 nm et 5,0 nm en excluant ces valeurs, voire entre 0,6 nm et 2,7 nm en excluant ces valeurs.

2. Substrat (10) selon la revendication 1, *caractérisé en ce que* ladite couche terminale (168) est située directement sur une couche diélectrique à base de nitrure de silicium et ne comportant pas d'oxygène.

3. Substrat (10) selon la revendication 2, *caractérisé en ce que* ladite couche diélectrique à base de nitrure de silicium présente une épaisseur physique comprise entre 10 et 50 nm.

4. Substrat (10) selon la revendication 2 ou 3, *caractérisé en ce que* ledit revêtement antireflet (160) disposé au-dessus de ladite couche fonctionnelle métallique (140), à l'opposé de ladite face (11), comporte une couche diélectrique haut indice (164) en un matériau présentant un indice de réfraction compris entre 2,3 et 2,7, cette couche étant de préférence à base d'oxyde.

5. Substrat (10) selon la revendication 4, *caractérisé en ce que* ladite couche haut indice (164) présente une épaisseur physique comprise entre 5 et 15 nm.

6. Vitrage multiple comportant au moins deux substrats (10, 30) qui sont maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats, un substrat (10) verrier, étant selon l'une quelconque des revendications 1 à 5.

7. Procédé d'obtention d'un substrat (10), verrier, revêtu sur une face (11) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent, et deux revêtements antireflet (120, 160), comprenant les étapes suivantes, dans l'ordre :

   - le dépôt sur une face (11) dudit substrat (10) verrier, selon l'une quelconque des revendications 1 à 5, d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent, et au moins deux revêtements antireflet (120, 160),
   - le traitement dudit empilement de couches minces (14) à l'aide d'une source produisant un rayonnement et notamment un rayonnement infrarouge dans une atmosphère comprenant de l'oxygène, ledit rapport x/y de la couche terminale (168) étant identique avant et après ledit traitement.

## Patentansprüche

1. Glassubstrat (10), das auf einer Seite (11) mit einem Stapel dünner Schichten (14) mit Reflexionseigenschaften im Infrarot und/oder im Sonnenlicht beschichtet ist, umfassend mindestens eine Metallfunktionsschicht (140), insbesondere auf Basis von Silber oder von Metalllegierung, die Silber enthält, und mindestens zwei Antireflexbeschichtungen (120, 160), wobei die Beschichtungen jeweils mindestens eine dielektrische Schicht (122, 164) umfassen, wobei die Funktionsschicht (140) zwischen den zwei Antireflexbeschichtungen (120, 160) angeordnet ist, wobei der Stapel ferner eine Anschlussschicht (168) umfasst, die die Schicht des Stapels ist, die am weitesten von der Seite (11) entfernt ist, *dadurch gekennzeichnet, dass* die Anschlussschicht (168) eine Metallschicht ist, die aus Zink und Zinn als $Sn_xZn_y$ mit einem Verhältnis von $0,55 \leq x/y \leq 0,83$ besteht und eine physikalische Dicke im Bereich zwischen 0,5 nm und 5,0 nm unter Ausschluss dieser Werte oder sogar zwischen 0,6 nm und 2,7 nm unter Ausschluss dieser Werte aufweist.

2. Substrat (10) nach Anspruch 1, *dadurch gekennzeichnet, dass* sich die Anschlussschicht (168) direkt auf einer dielektrischen Schicht auf Basis von Siliciumnitrid befindet und keinen Sauerstoff umfasst.

3. Substrat (10) nach Anspruch 2, *dadurch gekennzeichnet, dass* die dielektrische Schicht auf Basis von Siliciumnitrid eine physikalische Dicke im Bereich zwischen 10 und 50 nm aufweist.

4. Substrat (10) nach Anspruch 2 oder 3, *dadurch gekennzeichnet, dass* die Antireflexbeschichtung (160), die über der Metallfunktionsschicht (140) gegenüber der Seite (11) angeordnet ist, eine dielektrische Schicht mit hohem Index (164) aus einem Material, das einen Brechungsindex zwischen 2,3 und 2,7 aufweist, umfasst, wobei diese Schicht vorzugsweise auf Basis von Oxid vorliegt.

5. Substrat (10) nach Anspruch 4, *dadurch gekennzeichnet, dass* die Schicht mit hohem Index (164) eine physikalische Dicke im Bereich zwischen 5 und 15 nm aufweist.

6. Mehrfachverglasung, umfassend mindestens zwei Substrate (10, 30), die durch eine Rahmenstruktur (90) zusammengehalten werden, wobei die Verglasung eine Trennung zwischen einem Außenraum (ES) und einem Innenraum (IS) herstellt, in der mindestens einen Gaszwischenspalt (15) zwischen den zwei Substraten angeordnet ist, wobei ein Glassubstrat (10) einem der Ansprüche 1 bis 5 entspricht.

7. Verfahren zum Erhalten eines Glassubstrats (10), das auf einer Seite (11) mit einem Stapel dünner Schichten (14) mit Reflexionseigenschaften im Infrarot und/oder im Sonnenlicht beschichtet ist, umfassend mindestens eine Metallfunktionsschicht (140), insbesondere auf Basis von Silber oder einer Metalllegierung, die Silber enthält, und zwei Antireflexbeschichtungen (120, 160), umfassend folgende Schritte in dieser Reihenfolge:

- die Abscheidung, auf einer Seite (11) des Glassubstrats (10) nach einem der Ansprüche 1 bis 5, eines Stapels dünner Schichten (14) mit Reflexionseigenschaften im Infrarot und/oder im Sonnenlicht, umfassend mindestens eine Metallfunktionsschicht (140), insbesondere auf Basis von Silber oder einer Metalllegierung, die Silber enthält, und mindestens zwei Antireflexbeschichtungen (120, 160),
- die Behandlung des Stapels dünner Schichten (14) mit Hilfe einer Quelle, die Strahlung und insbesondere eine Infrarotstrahlung in einer Atmosphäre, die Sauerstoff umfasst, erzeugt, wobei das x/y-Verhältnis der Anschlussschicht (168) vor und nach der Behandlung identisch ist.

**Claims**

1. A glass substrate (10) coated on one face (11) with a thin-film multilayer (14) having reflection properties in the infrared and/or in solar radiation and comprising at least one metallic functional layer (140), in particular based on silver or on a metal alloy containing silver, and at least two antireflection coatings (120, 160), said coatings each comprising at least one dielectric layer (122, 164), said functional layer (140) being positioned between the two antireflection coatings (120, 160), said multilayer additionally comprising a terminal layer (168) which is the layer of the multilayer which is furthest from said face (11), *characterized in that* said terminal layer (168) is a metallic layer consisting of zinc and tin, made of $Sn_xZn_y$ with a ratio of $0.55 \leq x/y \leq 0.83$ and having a physical thickness of between 0.5 nm and 5.0 nm excluding these values, or even between 0.6 nm and 2.7 nm excluding these values.

2. The substrate (10) as claimed in claim 1, *characterized in that* said terminal layer (168) is located directly on a dielectric layer based on silicon nitride and comprising no oxygen.

3. The substrate (10) as claimed in claim 2, *characterized in that* said dielectric layer based on silicon nitride has a physical thickness of between 10 and 50 nm.

4. The substrate (10) as claimed in claim 2 or 3, *characterized in that* said antireflection coating (160) positioned on top of said metallic functional layer (140), on the opposite side from said face (11), comprises a high-index dielectric layer (164) made of a material having a refractive index of between 2.3 and 2.7, this layer preferably being based on an oxide.

5. The substrate (10) as claimed in claim 4, *characterized in that* said high-index layer (164) has a physical thickness of between 5 and 15 nm.

6. A multiple glazing comprising at least two substrates (10, 30) which are held together by a frame structure (90), said glazing providing a separation between an external space (ES) and an internal space (IS), wherein at least one intermediate gas-filled space (15) is positioned between the two substrates, one glass substrate (10) being as claimed in any one of claims 1 to 5.

7. A process for obtaining a glass substrate (10) coated on one face (11) with a thin-film multilayer (14) having reflection properties in the infrared and/or in solar radiation and comprising at least one metallic functional layer (140), in particular based on silver or on a metal alloy containing silver, and two antireflection coatings (120, 160), comprising the following steps, in the order:

- the deposition on one face (11) of said glass substrate (10) as claimed in any one of claims 1 to 5, of a thin-film multilayer (14) having reflection properties in the infrared and/or in solar radiation and comprising at least one metallic functional layer (140), in particular based on silver or on a metal alloy containing silver, and at least two antireflection coatings (120, 160),
- the treatment of said thin-film multilayer (14) using a source that produces radiation and in particular infrared radiation in an oxygen-containing atmosphere, said x/y ratio of the terminal layer (168) being identical before and after said treatment.

168
166
164
162
150
130
128
122

160

140

120

14

20

10

Fig. 1

100

90

ES

15

30

IS

11

29

31

9

10

14

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010142926 A